# EUROPEAN PATENT SPECIFICATION

(11) **EP 0 470 553 B1**
(45) Date of publication and mention of the grant of the patent: **06.04.1994**
(21) Application number: 91113138.1
(22) Date of filing: 05.08.1991
(51) Int. Cl.: C02F 5/12, C02F 5/08

(54) **Cooling system cleaning solutions**
Reinigungslösungen für Kühlsysteme
Solution de nettoyage pour des systèmes de refroidissement

(30) Priority: 06.08.1990 US 563007; 09.09.1990 US 594907
(43) Date of publication of application: 12.02.1992
(73) Proprietor: BASF CORPORATION, Parsippany, New Jersey 07054 (US)
(72) Inventor: Conville, John J., Canton, MI 48187 (US); Lyon, James T., Novi, MI 48050 (US); Turcotte, David E., Woodhaven, MI 48183 (US); Hirozawa, Stanley T., Birmingham, MI 48010 (US); Desai, Shrikant V., Grosse Ile, MI 48138 (US); Coker, Daniel E., Woodhaven, MI 48183 (US)
(74) Representative: Michaelis, Wolfgang, Dr.

(56) References cited:
- DE-A- 2 421 272
- US-A- 3 764 356
- US-A- 4 540 443

## Description

The subject invention pertains to cooling system cleaning solutions. More particularly, the subject invention pertains to storage stable cleaning solutions useful for removing various deposits from cooling systems utilized in the transportation industries.

Today in the transportation industry, cooling systems used to provide cooling for internal combustion engines contain a number of diverse materials in order to maximize cooling efficiency. At the same time, modern cooling systems minimize weight in order to promote fuel efficiency. Radiators, water pumps, impellers and housings of aluminum have become increasingly common, however, traditional materials, particularly cast iron, steel, brass, and copper continue to be used as well.

The extreme conditions in which these materials function are ideal for the formation of a variety of corrosion products such as metal oxides, hydroxides, and carbonates, as well as for the deposition of scale, particularly when "hard" water, i.e. water containing appreciable quantities of magnesium, and/or calcium ions is used. Finally, high lead content solders used to join together cooling system components are subject to the development of solder bloom, a high volume corrosion product.

These various deposits when created, coat the surfaces of cooling system components or clog their cooling passages, particularly in radiators. To remove these deposits, cleaning solutions are commonly used. However, these cleaning systems must perform their cleaning function, often in highly alkaline environments, without, at the same time, corroding the metals of which the cooling system is constructed. Furthermore, the cleaning solutions must be storage stable in order to be successfully commercialized.

United States patent 2,802,733, teaches a cleaning solution containing ethylenediamine tetraacetic acid (EDTA), sodium tripolyphosphate, sodium hydrogensulfite, and mixed oleic acid esters of polyoxyethylene glycols. In United States patent 3,419,501 is disclosed a cleaning solution containing EDTA, a nitrate salt, and an alkali metal silicate. United States patent 3,492,238 discloses a cleaning solution consisting of citric acid, sodium phosphate, sodium hydroxyethyl glycine, and sufficient water to maintain the pH between 6 and 7. In United States patent 4,540,443 is disclosed a cleaning solution effective for removing solder bloom, containing a salt of EDTA, a salt of citric acid, and a soluble salt of nitric acid, optionally containing also an aluminum corrosion inhibitor.

These prior cleaning solutions have had the drawbacks of introducing undesirable contaminants, for example phosphates, into the environment; the ability to remove scale but not solder bloom; or the inability of maintaining hardness ions such as calcium in solution at high pH levels. Many commercial cleaners cause darkening and/or corrosion of aluminum, while others may have limited shelf life. It would be desirable to prepare a cleaning solution for cooling systems which is effective in removing all common manner of scale and corrosion, in removing solder bloom, in maintaining hardness ions in solution even in highly alkaline environments, and which does not utilize phosphates in its composition. Most desirably, such a cleaning solution concentrate should be storage stable over extended periods.

It has now been surprisingly discovered that storage stable cleaning solutions for cooling systems may be prepared which are effective in removing scale, corrosion and oxidation products, and solder bloom without causing blackening or corrosion of the metal surfaces. Moreover, these compositions are effective in maintaining hardness ions such as calcium, aluminum, and iron in solution in the pH 9-14 range.

These and other objects have been achieved through the use of cleaning solutions comprising salts of a polyhydroxy mono- or dicarboxylic sugar acid or sorbitol, EDTA salts, sodium or ammonium nitrate, and optionally, nitric acid and/or preferably a corrosion inhibitor. This composition is preferably prepared as a concentrate and then diluted for use. Ethylene glycol is used in preparing the concentrate in order to render the concentrate storage stable for extended periods.

The EDTA salts suitable for use in the subject invention include the common alkali metal and ammonium salts of EDTA. The sodium salts are preferred, for example the disodium and tetrasodium salts. The tetrasodium salt is preferred.

A soluble nitrate salt, preferably an ammonium or alkali metal salt is used to supply nitrate to the composition. Sodium nitrate is preferred, however other equivalent methods of supplying nitrate ions may also be used. For example, the pH of the total composition may be adjusted by addition of nitric acid which also has the advantage of supplying nitrate ions. The reaction of nitric acid and basic salts contained in the composition will result in liberation of free carboxylic acid and formation of nitrate salts.

The polyhydroxy mono- and/or dicarboxylic acids useful in the compositions of the subject are commonly known as sugar acids, and correspond to the formulae:

HOOC-[CH(OH)]ₙ-X

wherein X is CH₂-OH or COOH, and wherein n is an integer from 2 to 4. Examples include glyconic and glycaric acids, muconic and mucaric acid, and saccharic acid. Preferred is gluconic acid. The polyhydroxy mono- and/or dicarboxylic acids are preferably used in the form of their salts, particularly their alkali metal salts, and most particularly the sodium salts. However, the free acids may also be useful.

Preferred cleaning solutions within the scope of the subject invention also include a corrosion inhibitor, particularly an inhibitor which prevents corrosion of aluminum. Such corrosion inhibitors are well known to those skilled in the art, for example alkali metal silicates, siliconates, and silicone-silicate mixtures are useful corrosion inhibitors for aluminum. Especially preferred is a stabilized silicate/silicone of the type disclosed by U.S. patents 4,370,255, 4,362,644, and 4,354,002 which are herein incorporated by reference. For corrosion protection on copper and brass, numerous derivatives are known commonly to those skilled in the art. Preferred are benzotriazole and tolyltriazole. Most preferred is tolytriazole as the sodium salt.

Also useful in the compositions of the subject invention is a mineral acid. The mineral acid may be used to obtain a favorable pH range, preferably from 7 to 14, more preferably from 9 to 11, or most preferably about 10.3. The mineral acid may be useful in supplying nitrate to the composition when the mineral acid is nitric acid, but primarily is useful in preventing blackening and dissolution of aluminum through pH adjustment, for which the pH 9-11 range is preferred.

The cleaning solution concentrates of the subject invention preferably contain, based on the weight of the concentrate, from 1.0 to about 30.0 percent, preferably from 1.0 to about 10.0 percent, and most preferably about 5.0 percent EDTA salt calculated on the basis of the tetrasodium salt; from 1.0 to about 50 percent, preferably from 1.5 to about 30 percent, and most preferably about 20 percent sorbitol or polyhydroxy mono- and/or dicarboxylic acid calculated on the basis of the sodium salt of gluconic acid; from 0.5 to about 8.0 percent, preferably from 1.0 to about 5.0 percent, and most preferably about 3.0 percent soluble nitrate salt calculated on the basis of sodium nitrate; from 1 to about 15, preferably from about 5 to 12, and most preferably about 10 percent of a silicon containing corrosion inhibitor, preferably a stabilized silicone/silicate inhibitor; and from 10 to about 50 percent, preferably from 20 to about 40 percent, and most preferably about 32 percent of a glycol, for example ethylene glycol, propylene glycol, diethylene glycol, or dipropylene glycol, and mixtures thereof. The balance of the composition is water, optionally containing low molecular weight alcohols such as methanol, ethanol, isopropanol, and the like. In the remainder of the specification and in the claims, this balance of the composition will be termed the "water miscible diluent." Preferably, the water miscible diluent is water or mixtures of water and lower alkanols.

When the composition contains a mineral acid, the acid is preferably present in an amount, based again on the total solution, of from 0.5 to about 8.0 weight percent calculated on the basis of 35 weight percent nitric acid. Preferably, the composition contains about 4.0 weight percent of 35 weight percent nitric acid.

The composition may optionally contain other additional corrosion inhibitors, inert ingredients, surfactants of the non-foaming type, polyoxyethylene glycols, biocides, fungicides, and so forth. Also useful are dyes, particularly the fluorescent dyes such as the alizarine green and uranine yellow dyes.

The cleaning solution of the subject invention has thus far been described in terms of a concentrate. The use of such concentrates allows for economical packaging and shipping, and generally are diluted with water or mixtures of water and commercial antifreeze or ethylene glycol for use. The ratio of dilution may vary, but is typically 1:20. It is possible, of course, to prepare concentrates which are more dilute than the preferred concentrates of the subject invention. For example, a two-fold "diluted" concentrate would contain approximately half the weight percentage compositional ranges of the preferred concentrates, and correspondingly more water. If the concentrate is diluted enough, it may be possible to further reduce the glycol content from its proportional value.

The term "storage stability" as used herein refers to the ability of the concentrate formulation to avoid precipitation and/or gelling at typical storage and shipment temperatures. Storage stability is assessed visually by observing concentrates stored at various temperatures for varying lengths of time. It has been found, for example, that a glycol, preferably ethylene glycol, must be present in the preferred concentrates, or gelation and/or precipitation may occur. If the concentrate is sold as a diluted concentrate, however, less ethylene glycol is expected to be necessary, and with certain formulations may be eliminated altogether.

### Example 1

A cleaning concentrate was prepared at pH 10.3 from 5.0 parts tetrasodium EDTA, 20.0 parts sorbitol, 3.0 parts sodium nitrate, sufficient nitric acid to adjust the pH to 10.3, 10.0 parts of stabilized silicone-silicate corrosion inhibitor, 32.0 parts ethylene glycol, and sufficient water to make 100.0 parts. It is possible to add water to obtain lower concentrations. The cleaning solution diluted approximately 1:19 with water, was circulated at 75.7 l/minute (20 gallons/minute) at 88°C (190°F) and tested against new metal coupons of copper, solder, brass, mild steel, cast iron, and aluminum in a modified ASTM D2570 test, and on coupons having various types of scale, corrosion, and solder bloom. Tests on the new metal coupons showed no significant metal loss. The solution also gave similar results in a more difficult modified ASTM D 1384 glassware corrosion test on new metal coupons.

The solution was generally effective in removing corrosion and oxidation products on all oxidized and corroded coupons based on the modified ASTM D2570 test. The solution was particularly efficient in removing solder bloom. Cast iron and steel coupons having moderate to heavy amounts of general and crevice corrosion and a moderate amount of rust, when treated, showed a small decrease in general. Copper and brass coupons having moderate to heavy amounts of corrosion were treated and showed substantial decrease in corrosion. A portion of the copper coupon was even judged to be shiny following treatment. Visual examination of all corroded metal coupon samples showed no detrimental effects, such as blackening or pitting, as a result of the simulated cleaning experiment.

### Example 2

A cleaning concentrate was prepared at pH 10.3 from 5.0 parts tetrasodium EDTA, 20.0 parts sodium gluconate, 3.0 parts sodium nitrate, 4.0 parts 35 weight percent nitric acid 10.0 parts of stabilized silicone-silicate corrosion inhibitor and water to make 100.0 parts. It is possible to add water to obtain lower concentrations. The cleaning solution diluted approximately 1:19 with water, was circulated at 75.7 l/minute (20 gallons/min.) at 88°C (190°F) and tested against new metal coupons of copper, solder, brass, mild steel, cast iron, and aluminum in a modified ASTM D 2570 test, and on coupons having various types of scale, corrosion, and solder bloom. Tests on the new metal coupons showed no significant metal loss.

The solution was effective in removing all corrosion and oxidation products on all oxidized and corroded coupons. The solution was particularly efficient in removing solder bloom. Cast iron and steel coupons having moderate to heavy amounts of general and crevice corrosion and a moderate amount of rust, when treated, showed substantial decrease in general corrosion and rust.

## Claims

1. A cooling system cleaning solution containing a nitrate salt and an EDTA salt, the improvement comprising employing an effective amount of a chelating agent which is sorbitol or a salt of one or more polyhydroxy mono- or dicarboxylic sugar acids.

2. A cooling system cleaning solution of claim 1, comprising, based on the total weight of the solution:
a. from 1 to 30 percent of an EDTA salt calculated on the basis of tetrasodium EDTA;
b. from about 1 to 50 percent of a salt of one or more polyhydroxy mono- or dicarboxylic sugar acids calculated on the basis of sodium gluconate or from 1 to 50 percent of sorbitol; and
c. from 0.5 to 8 percent of a soluble nitrate salt calculated on the basis of sodium nitrate;
the balance being a water miscible diluent.

3. A cooling system cleaning concentrate composition of claim 2, containing additional in weight percent based on the total weight of the concentrate,
d. from 1 to about 15 percent of a silicon containing aluminum corrosion inhibitor calculated on the basis of sodium silicate pentahydrate;
e. an amount of a glycol which is effective to render the composition storage stable; and
f. from 0.5 to 8 percent of a mineral acid.

4. The composition of claim 3 wherein said mineral acid is 35 weight percent nitric acid.

5. The composition of claim 2 wherein the pH of the composition is between 9 and 11.

6. The composition of claim 3 wherein said corrosion inhibitor (d) is a stabilized silicone/silicate corrosion inhibitor.

7. The cooling system cleaning solution of claim 1 wherein said sugar acid has the formula:
HOOC-(CH₂-OH)ₙ-X
wherein n is an integer from 2 to 4, and wherein X is CH₂-OH or COOH.

8. The cooling system cleaning solution of claim 7 wherein said sugar acid is gluconic acid.

9. A cooling system cleaning concentrate composition as claimed in claim 3, comprising, in weight percent based on the total weight of the concentrate,
a. from 1 to 10 percent of an EDTA salt calculated on the basis of the tetrasodium salt;
b. from 1.5 to 30 percent sorbitol;
c. from 1 to 5 percent of a soluble nitrate salt calculated on the basis of sodium nitrate;
d. from 5 to 12 percent of a stabilized silicone/silicate corrosion inhibitor;
e. from 10 to 50 percent of a glycol; and
f. from 0.5 to 8 percent of 35 weight percent nitric acid.

10. The composition of claim 9 wherein said glycol is ethylene glycol.

11. The composition of claim 9 wherein the EDTA salt (a) is persent in an amount of about 5 percent; sorbitol (b) is present in an amount of about 20 percent; the soluble nitrate salt is sodium nitrate present in an amount of about 3 percent; the corrosion inhibitor (d) is a stabilized silicone/silicate corrosion inhibitor present in an amount of about 10 percent; and the glycol (e) is ethylene glycol present in an amount of about 32 percent; the nitric acid (f) is present in amount of about 4 percent; the balance of the composition comprising essentially water.

12. The composition of claim 2 further comprising a copper and brass corrosion inhibitor.

13. The composition of claim 12 wherein said corrosion inhibitor is selected from the group consisting of benzotriazole, tolyltriazole, their salts, and mixtures thereof.

14. A cooling system cleaning solution as claimed in claim 3, comprising in weight percent, based on the total composition:
a. about 5 percent tetrasodium EDTA;
b. about 20 percent sodium gluconate;
c. about 3 percent sodium nitrate;
d. about 10 percent of stabilized silicone/silicate corrosion inhibitor;
e. about 4 percent of 35 weight percent nitric acid,
with the balance of the composition being water or a mixture of water and ethylene glycol.

15. A process for the cleaning of a coolant system comprising employing as the cleaning solution the cleaning solution of claim 1.

## Patentansprüche

1. Reinigungslösung für Kühlsysteme, die ein Nitratsalz sowie ein EDTA-Salz enthält, dadurch gekennzeichnet, daß eine wirksame Menge eines Chelatbildners aus Sorbit oder einem Salz einer oder mehrerer Polyhydroxyzuckermono- oder - dicarbonsäuren verwendet wird.

2. Reinigungslösung für Kühlsysteme nach Anspruch 1, die, bezogen auf das Gesamtgewicht der Lösung,
a. 1 bis 30 Prozent eines EDTA-Salzes berechnet auf EDTA-Tetranatriumsalz;
b. etwa 1 bis 50 Prozent eines Salzes einer oder mehrerer Polyhydroxyzuckermono- oder -dicarbonsäuren berechnet auf Gluconsäure-natriumsz oder 1 bis 50 Prozent Sorbit; sowie
c. 0,5 bis 8 Prozent eines löslichen Nitratsalzes berechnet auf Natriumnitrat enthält;
wobei der Rest aus einem mit Wasser mischbaren Verdünnungsmittel besteht.

3. Reinigungskonzentratzusammensetzung für Kühlsysteme nach Anspruch 2, die zusätzlich in Gewichtsprozent, bezogen auf das Gesamtgewicht des Konzentrats,
d. 1 bis 15 Prozent eines siliciumhaltigen Aluminium-Korrosionsschutzmittels berechnet auf Natriumsilikat-pentahydrat,
e. eine Menge eines Glykols mit lagerstabilmachender Wirkung, sowie
f. 0,5 bis 8 Prozent einer Mineralsäure enthält.

4. Zusammensetzung nach Anspruch 3, worin die Mineralsäure 35-gewichtsprozentige Salpetersäure ist.

5. Zusammensetzung nach Anspruch 2, worin der pH-Wert der Zusammensetzung zwischen 9 und 11 liegt.

6. Zusammensetzung nach Anspruch 3, worin das Korrosionsschutzmittel (d) ein stabilisiertes Silikon/Silikat-Korrosionsschutzmittel ist.

7. Reinigungslösung für Kühlsysteme nach Anspruch 1, worin die Zuckersäure die Formel:
HOOC-(CH₂-OH)ₙ-X
besitzt, worin n eine ganze Zahl von 2 bis 4 ist und worin X CH₂OH oder COOH bedeutet.

8. Reinigungslösung für Kühlsysteme nach Anspruch 7, worin die Zuckersäure Gluconsäure ist.

9. Reinigungskonzentratzusammensetzung für Kühlsysteme nach Anspruch 3, die in Gewichtsprozent, bezogen auf das Gesamtgewicht des Konzentrats,
a. 1 bis 10 Prozent eines EDTA-Salzes berechnet auf EDTA-Tetranatriumsalz;
b. 1,5 bis 30 Prozent Sorbit;
c. 1 bis 5 Prozent eines löslichen Nitratsalzes berechnet auf Natriumnitrat;
d. 5 bis 12 Prozent eines stabilisierten Silikon/Silikat-Korrosionsschutzmittels;
e. 10 bis 50 Prozent eines Glykols; sowie
f. 0,5 bis 8 Prozent 35-gewichtsprozentiger Salpetersäure enthält.

10. Zusammensetzung nach Anspruch 9, worin das Glykol Ethylenglykol ist.

11. Zusammensetzung nach Anspruch 9, worin das EDTA-Salz a) in einer Menge von etwa 5 Prozent enthalten ist; der Sorbit (b) in einer Menge von etwa 20 Prozent enthalten ist; das lösliche Nitratsalz Natriumnitrat ist und in einer Menge von etwa 3 Prozent enthalten ist; das Korrosionsschutzmittel (d) ein stabilisiertes Silikon/Silikat-Korrosionsschutzmittel ist und in einer Menge von etwa 10 Prozent enthalten ist; und das Glykol (e) Ethylenglykol ist und in einer Menge von etwa 32 Prozent enthalten ist; die Salpetersäure (f) in einer Menge von etwa 4 Prozent enthalten ist; wobei der Rest der Zusammensetzung im wesentlichen aus Wasser besteht.

12. Zusammensetzung nach Anspruch 2, die zusätzlich ein Kupfer- und Messing-Korrosionsschutzmittel enthält.

13. Zusammensetzung nach Anspruch 12, worin das Korrosionsschutzmittel aus der Gruppe Benztriazol, Tolyltriazol, deren Salzen sowie deren Mischungen ausgewählt ist.

14. Reinigungslösung für Kühlsysteme nach Anspruch 3, die in Gewichtsprozent, bezogen auf die Gesamtzusammensetzung,
a. etwa 5 Prozent EDTA-Tetranatriumsalz;
b. etwa 20 Prozent Gluconsäure-natriumsalz;
c. etwa 3 Prozent Natriumnitrat;
d. etwa 10 Prozent eines stabilisierten Silikon/Silikat-Korrosionsschutzmittels;
e. etwa 4 Prozent einer 35-gewichtsprozentigen Salpetersäure enthält,
wobei der Rest der Zusammensetzung aus Wasser oder einer Mischung aus Wasser und Ethylenglykol besteht.

15. Verfahren zur Reinigung eines Kühlsystems, wobei als Reinigungslösung eine Reinigungslösung nach Anspruch 1 verwendet wird.

## Revendications

1. Solution de nettoyage pour un système de refroidissement contenant un sel de nitrate et un sel d'EDTA, caractérisée en ce que l'on utilise une quantité efficace d'un agent chélatant qui est le sorbitol ou un sel de l'un ou plusieurs des acides mono- ou dicarboxyliques de sucre polyhydroxylés.

2. Solution de nettoyage pour un système de refroidissement selon la revendication 1, comprenant, par rapport au poids total de la solution :
a. de 1 à 30% d'un sel d'EDTA, calculés sur la base de l'EDTA tétrasodique;
b. d'environ 1 à 50% d'un sel de l'un ou plusieurs des acides mono- ou dicarboxyliques de sucre polyhydroxylés, calculés sur la base du gluconate de sodium, ou de 1 à 50% de sorbitol; et
c. de 0,5 à 8% d'un sel de nitrate soluble, calculés sur la base du nitrate de sodium;
le reste étant un diluant miscible à l'eau.

3. Composition concentrée de nettoyage pour un système de refroidissement selon la revendication 2, contenant de plus, en pourcents en poids, par rapport au poids total du concentré,
d. de 1 à environ 15% d'un agent d'inhibition de la corrosion de l'aluminium contenant du silicium, calculés sur la base du silicate de sodium pentahydraté;
e. une quantité d'un glycol qui est efficace pour rendre la composition stable au stockage; et
f. de 0,5 à 8% d'un acide minéral.

4. Composition selon la revendication 3, dans laquelle ledit acide minéral est de l'acide nitrique à 35% en poids.

5. Composition selon la revendication 2, dans laquelle le pH de la composition est compris entre 9 et 11.

6. Composition selon la revendication 3, dans laquelle ledit agent d'inhibition de la corrosion (d) est un agent d'inhibition de la corrosion au silicone/silicate.

7. Solution de nettoyage pour un système de refroidissement selon la revendication 1, dans laquelle ledit acide de sucre a la formule :
HOOC-(CH₂-OH)ₙ-X
dans laquelle n est un nombre entier compris entre 2 et 4, et dans laquelle X est CH₂-OH ou COOH.

8. Solution de nettoyage pour un système de refroidissement selon la revendication 7, dans laquelle ledit acide de sucre est l'acide gluconique.

9. Composition concentrée de nettoyage pour un système de refroidissement selon la revendication 3, comprenant, en pourcents en poids par rapport au poids total du concentré,
a. de 1 à 10% d'un sel d'EDTA, calculés sur la base du sel tétrasodique;
b. de 1,5 à 30% de sorbitol;
c. de 1 à 5% d'un sel de nitrate soluble, calculés sur la base du nitrate de sodium;
d. de 5 à 12% d'un agent d'inhibition de la corrosion au silicone/silicate stabilisé;
e. de 10 à 50% d'un glycol; et
f. de 0,5 à 8% d'acide nitrique à 35% en poids.

10. Composition selon la revendication 9, dans laquelle ledit glycol est l'éthylèneglycol.

11. Composition selon la revendication 9, dans laquelle le sel d'EDTA (a) est présent en une quantité d'environ 5%; le sorbitol (b) est présent en une quantité d'environ 20%; le sel de nitrate soluble est le nitrate de sodium présent en une quantité d'environ 3%; l'agent d'inhibition de la corrosion (d) est un agent d'inhibition de la corrosion au silicone/silicate stabilisé, présent en une quantité d'environ 10%; et le glycol (e) est l'éthylèneglycol, présent en une quantité d'environ 32%; l'acide nitrique (f) est présent en une quantité d'environ 4%; le reste de la composition comprenant essentiellement de l'eau.

12. Composition selon la revendication 2, comprenant de plus un agent d'inhibition de la corrosion du cuivre et du laiton.

13. Composition selon la revendication 12, dans laquelle ledit agent d'inhibition de la corrosion est choisi dans le groupe consistant en benzotriazole, tolyltriazole, leurs sels, et les mélanges de ceux-ci.

14. Solution de nettoyage pour un système de refroidissement selon la revendication 3, comprenant, en pourcents en poids, par rapport à la composition totale:
a. environ 5% d'EDTA tétrasodique;
b. environ 20% de gluconate de sodium;
c. environ 3% de nitrate de sodium;
d. environ 10% d'agent d'inhibition de la corrosion au silicone/silicate stabilisé;
e. environ 4% d'acide nitrique à 35% en poids,
le reste de la composition étant de l'eau ou un mélange d'eau et d'éthylèneglycol.

15. Procédé de nettoyage d'un système de refroidissement comprenant l'utilisation comme solution de nettoyage, de la solution de nettoyage selon la revendication 1.
